# EUROPEAN PATENT APPLICATION

(11) **EP 1 524 279 A1**
(43) Date of publication of application: **20.04.2005**
(21) Application number: 04024033.5
(22) Date of filing: 08.10.2004
(51) Int. Cl.: C08F 220/28, C09D 133/06, B41M 5/00, C09D 133/14

(54) **Cationic swellable dispersion polymers for ink jet coating**

(30) Priority: 16.10.2003 US 511913 P; 24.08.2004 US 925376
(71) Applicant: MeadWestvaco Corporation, Stamford, CT 06905 (US)
(72) Inventor: Samaranayake, Gamini S., Mount Pleasant, South Carolina 29464 (US); Gonzalez, Lourdes F., Mount Pleasant, South Carolina 29466 (US)
(74) Representative: Stoffregen, Hans-Herbert, Dr. Dipl.-Phys.

(57) **Abstract**

This invention pertains to cationic water-insoluble emulsion polymer latex compositions that exhibit excellent water absorbance capacities. More particularly, the invention pertains to the use of water-insoluble emulsion polymer latex compositions as ink jet ink receptive coatings.

## Description

The present application is related to U.S. provisional patent application Serial No. 60/511,913 filed on October 16, 2003, and U.S. utility patent application Serial No. 10/925,376, filed September 15, 2004, which are incorporated herein by reference.

### FIELD OF INVENTION

This invention pertains to cationic water-insoluble emulsion polymer latex compositions that exhibit excellent water absorbance capacities. More particularly, the invention pertains to the use of water-insoluble emulsion polymer latex compositions as ink jet ink receptive coatings.

### BACKGROUND OF THE INVENTION

Ink jet printing is widely used to print on a variety of substrates (including paper, textiles, plastic films, and the like). These substrates are usually coated with a material that enhances their receptivity for the ink jet ink. In the case of aqueous dye-based inks, which comprise the majority of inks currently used in ink jet printing, three properties are of primary importance.

The first property is the wetability of the ink jet receptive coating as determined by its surface tension (i.e., surface energy). Ink vehicles for inkjet inks which contain dye and/or pigments, particularly those which are generally used in home office printing devises, are commonly aqueous-based and contain some water-soluble organic co-solvents as humectants. Such ink vehicles often require ink receptive coatings that have relatively high surface energies.

The second property is an affinity for water, as the ink jet receptive coating must absorb a large amount of water from the ink in order to obtain a print that is dry to the touch in a few seconds. Ink jet ink formulations commonly contain over 90% water. Furthermore, the coating must maintain its physical integrity while absorbing all of this water. In other words, ink jet receptive coatings should be hydrophilic enough to absorb a large quantity of water without actually being water-soluble. In order to obtain high water absorption, ink jet receptive coatings have traditionally been formulated with both hydrophilic inorganic pigments (such as silica or alumina) and hydrophilic binders. While the most commonly used hydrophilic binders are polyvinyl alcohol (PVOH) and polyvinylpyrrolidinone (PVP), other suitable natural and synthetic polymers are known in the art (e.g., gelatin, starch, polyethylene oxide, hydroxyethylcellulose, carboxymethylcellulose, and the like). The presence of large amount of pigment in such coatings often requires calendaring to obtain a smooth surface on the substrate and may cause the coated substrates to exhibit reduced gloss characteristics.

The third important property is dye fixation. The majority of aqueous ink jet inks are based on dyes rather than pigments. To obtain sharp prints with high color densities, the dye molecules must be immobilized almost immediately upon contact of the ink with the substrate. Penetration of the dyes into the substrate will result in reduced color density, while lateral migration of the dye molecules will cause indistinctness in the image formed.

The dyes that are commonly employed in aqueous ink jet inks are anionic, containing sulfonic acid groups. Thus dye fixation is generally accomplished by the employment of cationic mordant polymers, which function by the mechanism of salt formation.

The most widely used cationic dye fixative in ink jet receptive coatings is poly(diallyldimethylammonium chloride), although other water-soluble cationic polymers are known in the art. For example, U.S. Patent No. 6,010,790 teaches the use of poly(vinylbenzylquaternary ammonium salts). Other examples of water-soluble cationic polymers are cationic starch, cationic polyvinyl alcohol, guanidine-fonnaldehyde resins, epichlorohydrin-polyamine condensates, and water-soluble cationic acrylic resins.

As an alternative to water-soluble cationic polymers, cationic acrylic or styrenic latices which also act as organic pigments can be used. However, as certain ink formulations require the use of ink jet receptive coatings with relatively high surface energies, the addition of hydrophilic binders to coatings formulated with such cationic lattices may be necessary to assure adequate water absorption and wetting characteristics.

Water-soluble gel based coatings have also been utilized in attempts to assure adequate water absorption and wetting characteristics for ink formulations which require high surface energy ink jet receptive coatings. Such gel-based coatings commonly include water-soluble absorbent materials such as polyacrylamides, polyacrylic acids, hydroxyalkylcellulose, carboxymethyl cellulose, and gelatin. Traditional gel based coatings are generally fabricated so that water-soluble gel forming material is embedded in a water-insoluble hydrophilic matrix, thereby forming a coating with a semi-interpenetrating network. While these coatings absorb water in their dry state to form hydrogels, such coatings have traditionally exhibited relatively poor waterfastness properties.

It would, therefore, be highly desirable to produce swellable polymeric coating compositions that are water-insoluble yet has the ability to absorb water, thereby eliminating the need to employ a semi-interpenetrating network construction such as that employed by traditional gel based coatings. The present invention describes such absorbent polymeric coating compositions.

Therefore, an object of the present invention is to disclose cationic water-insoluble polymer latex compositions.

A further object is to disclose cationic water-insoluble polymer latex compositions that are suitable for use in formulating ink jet receptive coatings.

Another object of the present invention is to disclose ink jet receptive coatings that exhibit excellent water absorption properties yet are water-insoluble.

A further object is to disclose relatively high surface energy ink jet receptive coatings that are easily wetable with aqueous-based dye and pigmented inks.

Another object of the present invention is to disclose cationic water-insoluble polymer latex compositions that have glass transition temperatures which are not greater than about 100°C.

A further object of the present invention is to disclose core-shell compositions wherein the shell components are cationic water-insoluble polymer latex compositions.

### SUMMARY OF THE INVENTION

The objects of this invention are met via the production of cationic water-insoluble polymer latex compositions. The use of these polymer compositions as ink jet receptive coatings avoids many of the problems associated with traditional coatings.

The cationic water-insoluble polymer latex compositions of the current invention are superior ink jet receptive coatings that exhibit excellent dye fixing abilities, water absorption characteristics (i.e., swellability), and gloss properties. This permits the use of these cationic water-insoluble polymer latex compositions without the need to add additional dye fixing additives and hydrophilic binders- the addition of which can adversely affect gloss and waterfastness properties of the ink jet receptive coatings. Moreover, the present ink jet receptive coatings exhibit relatively high surface energies that are very conducive to printing with water-based inks. Also, as the ink jet receptive coatings of the present invention have glass transition temperatures which are not greater than about 100°C, they demonstrate superior gloss characteristics.

### DESCRIPTION OF THE PREFERRED EMBODIMENT

The cationic water-insoluble polymer latex compositions of the present invention, which are suitable for use as ink jet receptive coatings, comprise the free radical emulsion polymerization reaction products of a mixture comprising:
a) about 40.0% to about 62.0% by total weight of the mixture of at least one hydroxyl group-containing monomer selected from the group consisting of hydroxyalkyl acrylates having at least 1 hydroxyl group containing from 1 to 4 carbon atoms, hydroxyalkyl methacrylates having at least 1 hydroxyl group containing from 1 to 4 carbon atoms, and combinations thereof;
b) about 27.0% to about 40.0% by total weight of the mixture of at least one hydrophobic monomer selected from the group consisting of acrylic esters of alcohols containing from 1 to 22 carbon atoms, methacrylic esters of alcohols containing from I to 22 carbon atoms, styrene, substituted styrenes, acrylonitrile, methacrylonitrile, vinyl halides, vinylidene halides, vinyl alkyl ethers, vinyl esters, and combinations thereof;
c) up to about 10.0% by total weight of the mixture of at least one member selected from the group consisting of acrylic acid, methacrylic acid, maleic acid, fumaric acid, and combinations thereof;
d) about 0.5% to about 15.0% by total weight of the mixture of at least one member selected from the group consisting of ethylenically unsaturated monomers containing at least one quaternary ammonium group;
e) up to about 15.0% by total weight of the mixture of at least one amide-functional monomer selected from the group consisting of N-vinyl amides, N-vinyl cyclic amides, acrylamides, N-alkyl acrylamides having at least I alkyl group containing from 1 to 4 carbon atoms, methacrylamides, and combinations thereof;
f) about 0.5% to about 8.0% by total weight of the mixture of at least one surfactant selected from the group consisting of nonionic surfactants, cationic surfactants and combinations thereof;
g) up to about 4.0% by total weight of the mixture of at least one chain transfer agent;
h) a catalytic amount of polymerization initiator; and
i) the balance of the mixture being water;
to produce a polymer composition having a solids content in the range of about 25.0% to about 50.0% wherein said polymer composition contains quaternary ammonium groups in the molar equivalent range of 0.002 to 0.07 per 100 grams of polymer and amide groups in the molar equivalent range of 0.002 to 0.12 per 100 grams of polymer, and which has a Tg of not greater than about 100°C.

Preferred cationic water-insoluble polymer latex compositions, which are suitable for use as ink jet receptive coatings, comprise the free radical emulsion polymerization reaction products of a mixture comprising:
a) about 45.0% to about 50.0% by total weight of the mixture of at least one hydroxyl group-containing monomer selected from the group consisting of hydroxyalkyl acrylates having at least 1 hydroxyl group containing from 1 to 4 carbon atoms, hydroxyalkyl methacrylates having at least 1 hydroxyl group containing from 1 to 4 carbon atoms, and combinations thereof;
b) about 30.0% to about 37.0% by total weight of the mixture of at least one hydrophobic monomer selected from the group consisting of acrylic esters of alcohols containing from I to 22 carbon atoms, methacrylic esters of alcohols containing from 1 to 22 carbon atoms, styrene, substituted styrenes, acrylonitrile, methacrylonitrile, vinyl halides, vinylidene halides, vinyl alkyl ethers, vinyl esters, and combinations thereof;
c) about 3.0% to about 10.0% by total weight of the mixture of at least one member selected from the group consisting of acrylic acid, methacrylic acid, maleic acid, fumaric acid, and combinations thereof;
d) about 7.0% to about 10.0% by total weight of the mixture of at least one member selected from the group consisting of ethylenically unsaturated monomers containing at least one quaternary ammonium group;
e) up to about 8.0% by total weight of the mixture of at least one amide-functional monomer selected from the group consisting of N-vinyl amides, N-vinyl cyclic amides, acrylamides, N-alkyl acrylamides having at least 1 alkyl group containing from 1 to 4 carbon atoms, methacrylamides, and combinations thereof;
f) about 1.0% to about 3.0% by total weight of the mixture of at least one surfactant selected from the group consisting of nonionic surfactants, cationic surfactants and combinations thereof;
g) up to about 2.0% by total weight of the mixture of at least one chain transfer agent;
h) a catalytic amount of polymerization initiator; and
i) the balance of the mixture being water;
to produce a polymer composition having a solids content in the range of about 25.0% to about 50.0% wherein said polymer composition contains quaternary ammonium groups in the molar equivalent range of 0.03 to 0.05 per 100 grams of polymer and amide groups in the molar equivalent range of 0.03 to 0.12 per 100 grams of polymer, and which has a Tg of not greater than about 100°C.

Hydroxyl group-containing monomers that are suitable for use in the free radical emulsion polymerization reaction of the present invention include hydroxyalkyl acrylates having at least 1 hydroxyl group containing from 1 to 4 carbon atoms, hydroxyalkyl methacrylates having at least I hydroxyl group containing from 1 to 4 carbon atoms, and combinations thereof. Preferred hydroxyl group-containing monomers include, but are not limited to, the following: hydroxyethyl acrylate, hydroxypropyl acrylate, hydroxybutyl acrylate, hydroxyethyl methacrylate, hydroxypropyl methacrylate, and the like. Hydroxyl group-containing monomer(s) constitute from about 40.0% to about 62.0% by total weight of the mixture employed in the free radical emulsion polymerization reaction of the present invention, with the preferred amount being in the range of about 45.0% to about 50.0%.

Hydrophobic monomers that are suitable for use in the free radical emulsion polymerization reaction of the present invention include acrylic esters of alcohols containing from 1 to 22 carbon atoms, methacrylic esters of alcohols containing from 1 to 22 carbon atoms, styrene, substituted styrenes, acrylonitrile, methacrylonitrile, vinyl halides, vinylidene halides, vinyl alkyl ethers, vinyl esters, and the like. Hydrophobic monomer(s) constitute from about 27.0% to about 40.0% by total weight of the mixture employed in the free radical emulsion polymerization reaction of the present invention, with the preferred amount being in the range of about 30.0% to about 37.0%.

Where desired to improve the print quality of certain colors, up to about 10.0% of the mixture employed in the free radical emulsion polymerization reaction of the present invention may consist of at least one member selected from the group consisting of acrylic acid, methacrylic acid, maleic acid, fumaric acid, and combinations thereof. It is preferred that the mixture contain from about 3.0% to about 10.0% of at least one member selected from the group consisting of acrylic acid, methacrylic acid, maleic acid, fumaric acid, and combinations thereof; with the more preferred amount being in the range of about 4.0% to about 8.0%. It is preferred that the cationic water-insoluble polymer latex compositions of the present invention contain carboxylic groups in the equivalent range of 0.07 to 0.14.

Ethylenically unsaturated monomers which are suitable for use in the present invention contain at least one quaternary ammonium group. It is preferred that the ethylenically unsaturated monomer be selected from the group consisting of vinylbenzyltrimethylammonium salts, acryloyloxyethyltrimethylammonium salts, acryloyloxyethyldiethylmethylammonium salts, methacryloyloxyethyltrimethylammonium salts, methacryloyloxyethylbenzyldimethylammonium salts, acryloyloxyethylbenzyldimethylammonium salts, 2-hydroxy-3-methacryloyloxypropyltrimethylammonium salts, 2-hydroxy-3-acryloyloxypropyltrimethylammonium salts, methacrylamidopropyltrimethylammonium salts, and combinations thereof. It is more preferred that these salts contain at least one counter anion selected from the group consisting of halides, sulfates, alkylsulfates, arylsulfates, and combinations thereof. It is further preferred that the counter anion be a member selected from the group consisting of chloride, bromide, methosulfate, sulfate, and combinations thereof. Ethylenically unsaturated monomer(s) containing at least one quaternary ammonium group constitute from about 0.5% to about 15.0% by total weight of the mixture employed in the free radical emulsion polymerization reaction of the present invention, with the preferred amount being in the range of about 7.0% to about 10.0%.

Where desired, up to 15.0% of the mixture employed in the free radical emulsion polymerization reaction of the present invention may consist of amide-functional monomer(s) selected from the group consisting of N-vinyl amides, N-vinyl cyclic amides, acrylamides, N-alkyl acrylamides having at least one alkyl group containing from 1 to 4 carbon atoms, methacrylamides, and combinations thereof. It is preferred that the mixture contain amide-functional monomer(s) in a range of up to about 8.0% by total weight of the mixture. The cationic water-insoluble polymer latex compositions of the present invention contain amide groups in the molar equivalent range of 0.03 to 0.12 per 100 grams of polymer latex composition. If the noted amide-functional monomer(s) are not employed in the free radical emulsion polymerization reaction mixture, then necessary amide functionalities should be supplied via at least one other monomeric reactant utilized in the mixture. It is preferred, in such cases, that the amide functionalities be supplied via the ethylenically unsaturated monomers containing at least one quaternary ammonium group (e.g., methacrylamidopropyltrimethylammonium salts and the like).

Surfactants suitable for use in the free radical emulsion polymerization reaction include members selected from the group consisting of nonionic surfactants, cationic surfactants, and combinations thereof. Preferred nonionic surfactants include ethoxylated alkylphenols, ethoxylated fatty alcohols, ethylene oxide/propylene oxide block copolymers, and the like. Preferred cationic surfactants include, but are not limited to, the following: alkyltrimethylammonium salts wherein the alkyl group contains from 8 to 22 (preferably 12 to 18) carbon atoms and the counterion of the salt is a member selected from the group consisting of chloride, bromide, methylsulfate, and ethylsulfate; alkylbenzyldimethylammonium salts wherein the alkyl group contains from 8 to 22 (preferably 12 to 18) carbon atoms and the counterion of the salt is a member selected from the group consisting of chloride, bromide, methylsulfate, and ethylsulfate; and alkylpyridinium salts wherein the alkyl group contains from 8 to 22 (preferably 12 to 18) carbon atoms and the counterion of the salt is a member selected from the group consisting of chloride, bromide, methylsulfate, and ethyl sulfate. It is further preferred that at least one nonionic surfactant and at least one cationic surfactant be included in the free radical emulsion polymerization reaction mixture. The surfactant(s) comprises from about 0.5% to about 8.0%, preferably from about 1.0% to about 3.0%, by weight of the total mixture employed to produce the emulsion polymer composition.

Where desired, up to about 4.0% (preferably up to about 2.0%) by total weight of the mixture of at least one chain transfer agent may be employed in the free radical emulsion polymerization reaction in order to lower the molecular weight of the emulsion polymer composition. Preferred chain transfer agents include dodecyl mercaptan, 2-mercaptoethanol, alkyl mercaptopropionates, mercaptoacetic acid, mercaptopropionic acid, octyl mercaptan, and the like.

A catalytic amount of at least one polymerization initiator is used in the free radical emulsion polymerization reaction. The amount of initiator employed commonly comprises from about 0.1% to about 3.0% (preferably from about 0.2% to about 2.0%) by weight of the total mixture used to produce the emulsion polymer. Traditional emulsion polymerization initiators (such as thermal initiators, redox initiators, and the like) are suitable for use in the emulsion polymerization reaction. Examples of suitable thermal initiators include, but are not limited to the following: hydrogen peroxide, t-butyl hydroperoxide, di-t-butyl peroxide, benzoyl peroxide, benzoyl hydroperoxide, 2,4-dichlorobenzoyl peroxide, t-butyl peracetate, azobisisobutyronitrile, and isopropyl peroxycarbonate. Examples of suitable redox initiators include cumene hydroperoxide-sodium metabisulfite, cumene hydroperoxide-iron (II) sulfate, and the like. Preferred initiators include water-soluble azo compounds (such as V-50, V-60, or VA-086 manufactured by Wako Chemicals).

Sufficient water is added to the mixture to produce a polymer latex composition having a solids content in the range of about 25.0% to about 50.0%. The preferred solids content for the emulsion polymerization product is in the range of about 30.0% to about 40.0%.

The cationic water-insoluble polymer latex compositions of the present invention are superior ink jet receptive coatings. Such ink jet receptive coatings can be employed to produce ink jet printable products via the process of coating a chosen substrate on at least one side with the ink jet receptive coating. Substrates which are suitable for use in producing such ink jet printable products include paper, paperboard, wood, plastic film, metal foil, textiles, and the like. Where desired, any of the pigments traditionally used in ink jet receptive coatings can be employed in the coating provided that the pigments are compatible with a cationic nature of the polymer latex composition. Such pigments include, but are not limited to, the following: silica, alumina, plastic pigments, calcium carbonate, and kaolin clay.

It is preferred that the ink jet receptive coatings of the present invention have a surface energy in the range of about 38 to about 70 dynes/cm, more preferably in the range of about 44 to about 65 dynes/cm. While the surface properties of the present ink jet receptive coatings are essential for its use with water-based ink formulations, these ink jet receptive coatings are also suitable for use with solvent-based ink formulations.

In order to facilitate film formation on substrates at reasonable processing temperatures, the cationic water-insoluble polymer latex compositions of the present invention have a glass transition temperature (Tg) of not greater than about 100°C. It is preferred that the compositions have a Tg in the range of about 58°C to less than 100°C, with the more preferred range being from about 60°C to about 78°C.

Where desired, cross-linking agents that are traditionally used with hydroxyl-functional resins can be added to the coating. Such cross-linkers include urea-formaldehyde resins, melamine-formaldehyde resins, glyoxal, glutaraldehyde, titanates, zirconium salts, and the like. Where the cationic water-insoluble polymer latex compositions of the present invention contain carboxylic acid groups, then dihydrazides, carbodiimides, and polyfunctional aziridines may be employed as cross-linking agents. Where utilized, the cross-linking agents are commonly employed in an amount sufficient to preserve the water absorbance capacities of the polymer composition (i.e., normally up to about 2% of the mixture). It is well within the ability of one skilled in the art to determine the amount of cross-linking agent(s) to be utilized based upon the desired characteristics of the polymer.

Where desired, other cationic and nonionic binders can be used in conjunction with the cationic water-insoluble polymer latex compositions. These binders include, but are not limited to, the following: polyvinyl alcohol, cationic polyvinyl alcohol, polyvinylpyrrolidone, cationic vinylpyrrolidone copolymers, polyethyloxazoline, cationic water-soluble acrylic polymers, nonionic water-soluble acrylic polymers, starch, cationic starch, polyethylene glycol, methylcellulose, hydroxyethylcellulose, and mixtures thereof.

Where desired, the cationic water-insoluble polymer latex compositions of the present invention can be employed as the shell component of core-shell compositions which are suitable for use as an ink jet receptive coating. Any compatible polymeric core component (both functional and non-functional) may be utilized. It is well within the ability of one skilled in the art to produce either functional or non-functional polymeric core components, depending upon the desired use, which are suitable for use with the cationic water-insoluble polymer latex compositions. The production of polymeric core components for core-shell compositions are taught in commonly assigned U.S. Patents Nos. 6,521,342 and 6,521,343 (which are hereby incorporated by reference).

Non-functional polymeric core components which are suitable for use in the present invention include, but are not limited to, the free radical polymerization reaction products of a mixture comprising: a) members selected from the group consisting of acrylic esters of alcohols containing from 1 to 22 carbon atoms, methacrylic esters of alcohols containing from I to 22 carbon atoms, hydroxyalkyl acrylates having at least 1 hydroxyl group containing from 1 to 4 carbon atoms, hydroxyalkyl methacrylates having at least 1 hydroxyl group containing from 1 to 4 carbon atoms, styrene, substituted styrenes, acrylonitrile, methacrylonitrile, vinyl chloride, vinylidene chloride, vinyl ethers, vinyl esters, N-vinyl amides, N-vinyl cyclic amides, acrylamides, methacrylamides, and combinations thereof; and b) a catalytic amount of polymerization initiator.

Functional polymeric core components which are suitable for use in the present invention include, but are not limited to, the free radical polymerization reaction products of a mixture comprising:
(a) about 80.0% to about 99.5% (preferably from about 85.0% to about 95.0%) by total weight of the mixture of a member selected from the group consisting of acrylic esters of alcohols containing from 1 to 22 carbon atoms, methacrylic esters of alcohols containing from 1 to 22 carbon atoms, hydroxyalkyl acrylates having at least 1 hydroxyl group containing from 1 to 4 carbon atoms, hydroxyalkyl methacrylates having at least 1 hydroxyl group containing from 1 to 4 carbon atoms, styrene, substituted styrenes, acrylonitrile, methacrylonitrile, vinyl chloride, vinylidene chloride, vinyl ethers, vinyl esters, N-vinyl amides, N-vinyl cyclic amides, acrylamides, methacrylamides, and combinations thereof;
(b) about 0.5% to about 20.0% (preferably from about 5.0% to about 15.0%) by total weight of the mixture of a member selected from the group consisting of ethylenically unsaturated monomers containing at least one quaternary ammonium group and combinations thereof; and
(c) a catalytic amount of polymerization initiator.

The cationic water-insoluble polymer latex compositions of the present invention are disposed generally about a polymeric core component in order to produce core-shell compositions which are suitable for use as ink jet receptive coatings. It is well within the ability of one skilled in the art to employ the teachings contained herein to produce core-shell compositions which has at its shell component the cationic water-insoluble polymer latex compositions of the present invention. Where desired, the core-shell composition may comprise a plurality of such shell components, each disposed about the polymeric core component.

Latexes suitable for use as ink jet receptive coatings in the present invention include aqueous suspensions of cationic core-shell compositions. It is preferred that such latexes have a solids content in the range of about 20.0% to about 60.0%, with the more preferred range being about 30.0% to about 45.0%.

The core-shell latexes of the present invention are excellent ink jet receptive coatings which impart superior fade resistances. Such ink jet receptive coatings can be employed to produce ink jet printable products via the process of coating a chosen substrate on at least one side with the ink jet receptive coating. Substrates which are suitable for use in producing such ink jet printable products include paper, paperboard, wood, plastic film, metal foil, textiles, and the like. Where desired, any of the pigments traditionally used in ink jet receptive coatings can be employed in the coating provided that the pigments are compatible with a cationic coating. Such pigments include, but are not limited to, the following: silica, alumina, plastic pigments, calcium carbonate, kaolin clay, and combinations thereof.

As appreciated in the art, the exact components and properties of components desired for any coating application can vary and, therefore, routine experimentation may be required to determine the optional components and proportions of components for a given application and desired properties.

The following examples are provided to further illustrate the present invention and are not to be construed as limiting the invention in any manner.

### EXAMPLE 1

A water-insoluble polymer latex composition suitable for use in formulating ink jet receptive coatings was prepared as follows. To a round-bottomed flask fitted with a mechanical stirrer, heating mantle, and inlet tubes for monomer feed was charged, with stirring, 219.0 g of deionized water and 12.0 g of ARQUAD C-50 (a 50% solution of a cationic surfactant in isopropyl alcohol manufactured by Akzo Nobel). A solution of 3.0 g of V-50 (an azo polymerization initiator manufactured by Wako Chemicals) in 7.5 mL of deionized water was added to the flask, and the mixture was heated to 60°C.

Two monomer feeds were then prepared. The first was a mixture of 45.0 g of styrene, 12.0 g of butyl acrylate, and 18.0 g of hydroxyethyl acrylate. The second feed was a mixture of 30.0 g of a 50% aqueous methacrylamidopropyltrimethylammonium chloride solution and 60.0 g of hydroxyethyl methacrylate. The two monomer feeds were added concurrently to the flask over a period of two and one half hours. At the end of the addition period, the temperature of the mixture was raised to 70°C and held at that temperature for an additional hour. Thereafter, a solution of 0.5 g of V-086 (an azo polymerization initiator manufactured by Wako Chemicals) in 25.0 mL of deionized water was added to the flask, the temperature of the mixture was increased to 80°C, and the mixture was stirred with a nitrogen purge for a two-hour period to scavenge any residual monomer. The resultant polymer latex composition had a solids content of 30%, an average particle size of 165 nm, and a surface tension of at least 44 dynes/cm.

### EXAMPLE 2

A water-insoluble cationic emulsion polymer latex composition was prepared as follows. To a round-bottomed flask fitted with a mechanical stirrer, heating mantle, and inlet tubes for monomer feed was charged, with stirring, 103.0 g of deionized water, 0.9 g of ARQUAD C-50 (a 50% solution of a cationic surfactant in isopropyl alcohol manufactured by Akzo Nobel), and 1.5 g of TERGITOL NP-10 (a nonionic surfactant manufactured by Union Carbide). A solution of 3.0 g of V-50 (an azo polymerization initiator manufactured by Wako Chemicals) in 7.5 mL of deionized water was added to the flask, and the mixture was heated to 60°C.

Two monomer feeds were then prepared. The first was a mixture of 53.0 g of styrene, 7.5 g of butyl acrylate, and 30.0 g of hydroxyethyl acrylate. The second feed was a solution of 30.0 g of a 50% aqueous methacrylamidopropyltrimethylammonium chloride solution, 45.0 g of hydroxyethyl methacrylate, and 0.9 g of ARQUAD C-50 in 70.0 mL of deionized water. The two monomer feeds were added concurrently to the flask over a period of two and one half hours. At the end of the addition period, the temperature of the mixture was raised to 70°C and held at that temperature for an additional hour. Thereafter, a solution of 0.5 g of V-086 (an azo polymerization initiator manufactured by Wako Chemicals) in 25.0 mL of deionized water was added to the flask, the temperature of the mixture was increased to 80°C, and the mixture was stirred with a nitrogen purge for a two-hour period to scavenge any residual monomer. The resultant latex composition had a solids content of 38%, an average particle size of 256 nm, a surface tension of at least 44 dynes/cm, and a Tg of 64°C.

### EXAMPLE 3

A water-insoluble cationic emulsion polymer latex composition was prepared as follows. To a round-bottomed flask fitted with a mechanical stirrer, heating mantle, and inlet tubes for monomer feed was charged, with stirring, 231.0 g of deionized water, 0.9 g of ARQUAD C-50 (a 50% solution of a cationic surfactant in isopropyl alcohol manufactured by Akzo Nobel), and 1.5 g of TERGITOL NP-10 (a nonionic surfactant manufactured by Union Carbide). A solution of 3.0 g of V-50 (an azo polymerization initiator manufactured by Wako Chemicals) in 7.5 mL of deionized water was added to the flask, and the mixture was heated to 60°C.

Two monomer feeds were then prepared. The first was a mixture of 45.0 g of styrene, 15.0 g of butyl acrylate, and 30.0 g of hydroxyethyl acrylate. The second feed was a solution of 30.0 g of a 50% aqueous methacrylamidopropyltrimethylammonium chloride solution, 45.0 g of hydroxyethyl methacrylate, and 0.9 g of ARQUAD C-50 in 100.0 mL of deionized water. The two monomer feeds were added concurrently to the flask over a period of two and one half hours. At the end of the addition period, the temperature of the mixture was raised to 70°C and held at that temperature for an additional hour. Thereafter, a solution of 0.5 g of V-086 (an azo polymerization initiator manufactured by Wako Chemicals) in 25.0 mL of deionized water was added to the flask, the temperature of the mixture was increased to 80°C, and the mixture was stirred with a nitrogen purge for a two-hour period to scavenge any residual monomer. The resultant latex composition had a solids content of 29%, an average particle size of 157 nm, a surface tension of at least 44 dynes/cm, and a Tg of 64°C.

### EXAMPLE 4

A water-insoluble cationic emulsion polymer latex composition was prepared as follows. To a round-bottomed flask fitted with a mechanical stirrer, heating mantle, and inlet tubes for monomer feed was charged, with stirring, 387.0 g of deionized water, 4.2 g of ARQUAD C-50 (a 50% solution of a cationic surfactant in isopropyl alcohol manufactured by Akzo Nobel), and 6.0 g of TERGITOL NP-10 (a nonionic surfactant manufactured by Union Carbide). A solution of 6.0 g of V-50 (an azo polymerization initiator manufactured by Wako Chemicals) in 5.0 mL of deionized water was added to the flask, and the mixture was heated to 60°C.

Two monomer feeds were then prepared. The first was a mixture of 53.0 g of styrene, 15.0 g of butyl acrylate, 68.0 g of hydroxyethyl acrylate, 15.0 g of acrylic acid, and 15.0 g of methylmethacrylate. The second feed was a solution of 60.0 g of a 50% aqueous methacrylamidopropyltrimethylammonium chloride solution, 90.0 g of hydroxyethyl methacrylate, 15.0 g of N-vinylpyrrolidinone, and 1.8 g of ARQUAD C-50 in 140.0 mL of deionized water. The two monomer feeds were added concurrently to the flask over a period of two and one half hours. At the end of the addition period, the temperature of the mixture was raised to 70°C and held at that temperature for an additional hour. Thereafter, 0.5 g of t-butyl hydroperoxide and a solution of 0.9 g of isoascorbic acid in 6.0 of deionized water were added to the flask, the temperature of the mixture was increased to 80°C, and the mixture was stirred with a nitrogen purge for a two-hour period to scavenge any residual monomer. The resultant latex composition had a solids content of 35%.

### EXAMPLE 5

A water-insoluble cationic emulsion polymer latex composition was prepared as follows. To a round-bottomed flask fitted with a mechanical stirrer, heating mantle, and inlet tubes for monomer feed was charged, with stirring, 217.0 g of deionized water, 0.9 g of ARQUAD C-50 (a 50% solution of a cationic surfactant in isopropyl alcohol manufactured by Akzo Nobel), and 1.5 g of TERGITOL NP-10 (a nonionic surfactant manufactured by Union Carbide). A solution of 3.0 g of V-50 (an azo polymerization initiator manufactured by Wako Chemicals) in 7.5 mL of deionized water was added to the flask, and the mixture was heated to 60°C.

Two monomer feeds were then prepared. The first was a mixture of 45.0 g of styrene, 7.5 g of butyl acrylate, 27.0 g of hydroxyethyl acrylate, and 15.0 g of acrylic acid. The second feed was a solution of 30.0 g of a 50% aqueous methacrylamidopropyltrimethylammonium chloride solution, 41.0 g of hydroxyethyl methacrylate, 1.5 g of acrylamide, and 0.9 of ARQUAD C-50 in 100.0 mL of deionized water. The two monomer feeds were added concurrently to the flask over a period of two and one half hours. At the end of the addition period, the temperature of the mixture was raised to 70°C and held at that temperature for an additional hour. Thereafter, a solution of 0.5 g of V-086 (an azo polymerization initiator manufactured by Wako Chemicals) in 25.0 mL of deionized water was added to the flask, the temperature of the mixture was increased to 80°C, and the mixture was stirred with a nitrogen purge for a two-hour period to scavenge any residual monomer. The resultant latex composition had a solids content of 30%, an average particle size of 151 nm, a surface tension of at least 44 dynes/cm, and a Tg of 76°C.

### EXAMPLE 6

A water-insoluble cationic emulsion polymer latex composition was prepared as follows. To a round-bottomed flask fitted with a mechanical stirrer, heating mantle, and inlet tubes for monomer feed was charged, with stirring, 217.0 g of deionized water, 0.9 g of ARQUAD C-50 (a 50% solution of a cationic surfactant in isopropyl alcohol manufactured by Akzo Nobel), and 1.5 g of TERGITOL NP-10 (a nonionic surfactant manufactured by Union Carbide). A solution of 3.0 g of V-50 (an azo polymerization initiator manufactured by Wako Chemicals) in 7.5 mL of deionized water was added to the flask, and the mixture heated to 60°C. Two monomer feeds were then prepared. The first was a mixture of 45.0 g of styrene, 7.5 g of butyl acrylate, 24.0 g of hydroxyethyl acrylate, and 15.0 of acrylic acid. The second feed was a solution of 30.0 g of a 75% aqueous methacryloxyethyltrimethylammonium chloride solution, 36.0 g of hydroxyethyl methacrylate. 7.5 g of acrylamide, and 0.9 g of ARQUAD C-50 in 100.0 mL of deionized water. The two monomer feeds were added concurrently to the flask over a period of two and one half hours. At the end of the addition period, the temperature of the mixture was raised to 70°C and the temperature maintained for an additional hour. Thereafter, a solution of 0.5 g of V-086 (an azo polymerization initiator manufactured by Wako Chemicals) in 25.0 mL of deionized water was added to the flask, the temperature of the mixture increased to 80°C, and the mixture stirred with a nitrogen purge for a two-hour period in order to scavenge any residual monomer. The resultant latex composition had a solids content of 30.0% and an average particle size of 147 nm.

### EXAMPLE 7

A water-insoluble cationic emulsion polymer latex composition was prepared as follows. To a round-bottomed flask fitted with a mechanical stirrer, heating mantle, and inlet tubes for monomer feed was charged, with stirring, 135.0 of deionized water, 0.9 g of ARQUAD C-50 (a 50% solution of a cationic surfactant in isopropyl alcohol manufactured by Akzo Nobel), and 1.5 g of TERGITOL NP-10 (a nonionic surfactant manufactured by Union Carbide). A solution of 3.0 g of V-50 (an azo polymerization initiator manufactured by Wako Chemicals) in 7.5 mL of deionized water was added to the flask, and the mixture was heated to 60°C.

Two monomer feeds were then prepared. The first was a mixture of 45.0 g of styrene, 7.5 g of butyl acrylate, 30.0 g of hydroxyethyl acrylate, and 7.5 of acrylic acid. The second feed was a solution of 30.0 g of a 50% aqueous methacrylamidopropyltrimethylammonium chloride solution, 45.0 g of hydroxyethyl methacrylate, and 0.9 g of ARQUAD C-50 in 100.0 mL of deionized water. The two monomer feeds were added concurrently to the flask over a period of two and one half hours. At the end of the addition period, the temperature of the mixture was raised to 70°C and held at that temperature for an additional hour. Thereafter, a solution of 0.5 g of V-086 (an azo polymerization initiator manufactured by Wako Chemicals) in 25.0 mL of deionized water was added to the flask, the temperature of the mixture was increased to 80°C, and the mixture was stirred with a nitrogen purge for a two-hour period to scavenge any residual monomer. The resultant latex composition had a solids content of 30%, an average particle size of 153 nm, a surface tension of at least 44 dynes/cm, and a Tg of 72°C.

### EXAMPLE 8

A water-insoluble cationic emulsion polymer core-shell latex composition having a non-functional polymeric core component (i.e., a core component that does not contain monomers of a cationic nature which promote dye fixation) can be prepared as follows.

To a round-bottomed flask fitted with a mechanical stirrer, heating mantle, and inlet tubes for monomer feed is charged, with stirring, 410.0 g of deionized water, 4.2 g of ARQUAD C-50 (a 50% solution of a cationic surfactant in isopropyl alcohol manufactured by Akzo Nobel), 6.0 g of TERGITOL NP-10 (a nonionic surfactant manufactured by Union Carbide), 27.0 g of styrene, 5.0 g of butyl acrylate, and a solution of 6.0 g of V-50 (an azo polymerization initiator manufactured by Wako Chemicals) in 15.0 g of deionized water, and the mixture is heated to 60°C. Then a mixture of 152.0 g of styrene, and 27.0 g of butyl acrylate are added to the flask over a two-hour period. At the end of the addition period, the temperature of the mixture is raised to 70°C and the temperature maintained for an additional hour.

The resulting polymer core component is cooled to 60°C, and a solution of 2.4 g of V-50 in 38.0 g of deionized water is added to the flask. Thereafter, two monomer feeds are prepared. The first is a solution of 100.0 g of deionized water, 1.8 g of ARQUAD C-50, 18 g of 50% aqueous methacrylamidopropyltrimethylammonium chloride solution, and 27.0 g of hydroxyethyl methacrylate. The second monomer feed is a mixture of 22.5 g of styrene, 22.5 g of hydroxyethyl acrylate, 5.0 g of butyl acrylate, and 5.0 g of acrylic acid. The two monomer feeds are added concurrently to the flask over a one-hour period. At the end of the addition period, the temperature of the mixture is raised to 70°C and maintained at that temperature for an additional hour. Thereafter, 0.5g of t-butyl hydroperoxide and a solution of 0.9 g of isoascorbic acid in 6.0 g of deionized water are added to the flask. The temperature is then raised to 80°C and stirring is continued for a two-hour period to scavenge any residual monomer. The resulting latex will be comprised of an aqueous suspension of core-shell particles, wherein the shell component is a water-insoluble cationic polymer.

### EXAMPLE 9

A water-insoluble cationic emulsion polymer core-shell latex composition having a functional polymeric core component (i.e., a core component that contains cationic monomers which promote dye fixation) can be prepared as follows.

To a round-bottomed flask fitted with a mechanical stirrer, heating mantle, and inlet tubes for monomer feed is charged, with stirring, 410.0 g of deionized water, 4.2 g of ARQUAD C-50 (a 50% solution of a cationic surfactant in isopropyl alcohol manufactured by Akzo Nobel), 6.0 g of TERGITOL NP-10 (a nonionic surfactant manufactured by Union Carbide), 27.0 g of styrene, 6.3 g of methacryloxyethyltrimethylammoniumchloride and a solution of 6.0 g of V-60 (an azo polymerization initiator manufactured by Wako Chemicals) in 15.0 g of deionized water is added to the flask, and the mixture is heated to 60°C.

Two monomer feeds are then prepared. The first feed is 152.0 g of styrene, and the second is 6.3 g of methacryloxyethyltrimethylammoniumchloride. The two monomers are added concurrently to the flask over a two-hour period. At the end of the addition period, the temperature of the mixture is raised to 70°C and the temperature maintained for an additional hour.

The resulting polymer core component is cooled to 60°C, and a solution of 2.4 g of V-60 in 28.0 g of deionized water is added to the flask. Thereafter, two monomer feeds are prepared. The first is a solution of 100.0 g of deionized water, 1.8 g of ARQUAD C-50, 18.0 g of 50% aqueous methacrylamidopropyltrimethylammonium chloride solution, and 27.0 g of hydroxyethyl methacrylate. The second monomer feed is a mixture of 22.5 g of styrene, 22.5 g of hydroxyethyl acrylate, 5.0 g of butyl acrylate, and 5.0 g of acrylic acid. The two monomer feeds are added concurrently to the flask over a one-hour period. At the end of the addition period, the temperature of the mixture is raised to 70°C and maintained at that temperature for an additional hour. Thereafter, 0.5g of t-butyl hydroperoxide and a solution of 0.9 g of isoascorbic acid in 6.0 g of deionized water are added to the flask. The temperature is then raised to 80°C and stirring is continued for a two-hour period to scavenge any residual monomer. The resulting latex will be comprised of an aqueous suspension of core-shell particles, wherein the shell component is a water-insoluble cationic polymer.

### EXAMPLE 10

The water-insoluble cationic emulsion polymer latex composition of Example 2 was employed as an ink jet receptive coating via the following procedure. The polymer latex composition was coated on sheets of STERLING® ULTRA GLOSS (a paper manufactured by MeadWestvaco Corporation) using a No. 12 wire-wound rod. The coated sheets were then dried for 2 minutes at a temperature of 105°C. After drying, the gloss of the coated sheets measured in range of 77 - 88. Test prints were made on the dried coated sheets using solid RGBCMYK color patches via a Hewlett Packard 880 ink jet printer and an Epson 880 printer. Color densities and print gloss of the printed samples were recorded and evaluated. The prints exhibited superior color gamut, print quality, and edge acuity.

### EXAMPLE 11

The water-insoluble cationic emulsion polymer latex composition of Example 2 was employed as an ink jet receptive coating via the following procedure. To the polymer latex composition of Example 2 was added 1% (based on dry weight) of a polyfunctional aziridine crosslinker (manufactured by Bayer). The resulting ink jet receptive coating was coated on sheets of STERLING® ULTRA GLOSS (a paper manufactured by MeadWestvaco Corporation) using a No. 12 wire-wound rod. The coated sheets were then dried for 2 minutes at a temperature of 105°C. After drying, the gloss of the coated sheets measured in range of 77 - 88. Test prints were made on the dried coated sheets using solid RGBCMYK color patches via a Hewlett Packard 880 ink jet printer and an Epson 880 printer. Color densities and print gloss of the printed samples were recorded and evaluated. The prints exhibited superior color gamut, print quality, and edge acuity. The ink jet receptive coatings also exhibited improved waterfastness when compared to the coatings of Example 10.

### EXAMPLE 12

The water-insoluble cationic emulsion polymer latex composition of Example 2 was employed as an ink jet receptive coating via the following procedure. To 80 pails by weight of the polymer latex composition of Example 2 was mixed 20 parts by weight of cationic organic pigment (non-hydrogel forming latex particles) and 1% (based on dry weight) of a polyfunctional aziridine crosslinker (manufactured by Bayer). The resulting ink jet receptive coating was coated on sheets of STERLING® ULTRA GLOSS (a paper manufactured by MeadWestvaco Corporation) using a No. 12 wire-wound rod. The coated sheets were then dried for 2 minutes at a temperature of 105°C. After drying, the gloss of the coated sheets measured in range of 50 - 70. Test prints were made on the dried coated sheets using solid RGBCMYK color patches via a Hewlett Packard 880 ink jet printer and an Epson 880 printer. Color densities and print gloss of the printed samples were recorded and evaluated. The prints exhibited superior color gamut, print quality, and edge acuity. The waterfastness of the coating was Fair.

### EXAMPLE 13

The water-insoluble cationic emulsion polymer latex composition of Example 7 was employed as an ink jet receptive coating via the following procedure. The polymer latex composition was coated on sheets of STERLING® ULTRA GLOSS (a paper manufactured by MeadWestvaco Corporation) using a No. 12 wire-wound rod. The coated sheets were then dried for 2 minutes at a temperature of 105°C. After drying, the gloss of the coated sheets measured in range of 70 - 90. Test prints were made on the dried coated sheets using solid RGBCMYK color patches via a Hewlett Packard 880 ink jet printer and an Epson 880 printer. Color densities and print gloss of the printed samples were recorded and evaluated. The prints exhibited superior color gamut, print quality, and edge acuity.

### EXAMPLE 14

The water-insoluble cationic emulsion polymer latex composition of Example 7 was employed as an ink jet receptive coating via the following procedure. To the polymer latex composition of Example 7 was added 1% (based on dry weight) of a polyfunctional aziridine crosslinker (manufactured by Bayer). The resulting ink jet receptive coating was coated on sheets of STERLING® ULTRA GLOSS (a paper manufactured by MeadWestvaco Corporation) using a No. 12 wire-wound rod. The coated sheets were then dried for 2 minutes at a temperature of 105°C. After drying, the gloss of the coated sheets measured in range of 70 - 85. Test prints were made on the dried coated sheets using solid RGBCMYK color patches via a Hewlett Packard 880 ink jet printer and an Epson 880 printer. Color densities and print gloss of the printed samples were recorded and evaluated. The ink jet receptive coatings exhibited superior color gamut, print quality, and edge acuity. The ink jet receptive coatings also exhibited improved waterfastness when compared to the coatings of Example 13.

### EXAMPLE 15

The water-insoluble cationic emulsion polymer latex composition of Example 7 was employed as an inkjet receptive coating via the following procedure. To the polymer latex composition of Example 7 was added 5% by weight of propylene glycol and 2% by weight of a polyfunctional aziridine crosslinker (manufactured by Bayer). The resulting ink jet receptive coating was coated on sheets of STERLING® ULTRA GLOSS (a paper manufactured by MeadWestvaco Corporation) using a No. 12 wire-wound rod. The coated sheets were then dried for 2 minutes at a temperature of 105°C. After drying, the gloss of the coated sheets measured in range of 60 - 80. Test prints were made on the dried coated sheets using solid RGBCMYK color patches via a Hewlett Packard 880 ink jet printer and an Epson 880 printer. Color densities and print gloss of the printed samples were recorded and evaluated. The prints exhibited superior color gamut, print quality, and edge acuity.

Many modifications and variations of the present invention will be apparent to one of ordinary skill in the art in light of the above teachings. It is therefore understood that the scope of the invention is not to be limited by the foregoing description, but rather is to be defined by the claims appended hereto.

## Claims

1. A cationic water-insoluble polymer latex composition suitable for use as an ink jet receptive coating, said composition comprising the free radical emulsion polymerization reaction product of a mixture comprising:
a) about 40.0% to about 62.0% by total weight of the mixture of at least one hydroxyl group-containing monomer selected from the group consisting of hydroxyalkyl acrylates having at least I hydroxyl group containing from 1 to 4 carbon atoms, hydroxyalkyl methacrylates having at least 1 hydroxyl group containing from 1 to 4 carbon atoms, and combinations thereof;
b) about 27.0% to about 40.0% by total weight of the mixture of at least one hydrophobic monomer selected from the group consisting of acrylic esters of alcohols containing from 1 to 22 carbon atoms, methacrylic esters of alcohols containing from 1 to 22 carbon atoms, styrene, substituted styrenes, acrylonitrile, methacrylonitrile, vinyl halides, vinylidene halides, vinyl alkyl ethers, vinyl esters, and combinations thereof;
c) up to about 10.0% by total weight of the mixture of at least one member selected from the group consisting of acrylic acid, methacrylic acid, maleic acid, fumaric acid, and combinations thereof;
d) about 0.5% to about 15.0% by total weight of the mixture of at least one member selected from the group consisting of ethylenically unsaturated monomers containing at least one quaternary ammonium group;
e) up to about 15.0% by total weight of the mixture of at least one amide-functional monomer selected from the group consisting of N-vinyl amides, N-vinyl cyclic amides, acrylamides, N-alkyl acrylamides having at least 1 alkyl group containing from 1 to 4 carbon atoms, methacrylamides, and combinations thereof;
f) about 0.5% to about 8.0% by total weight of the mixture of at least one surfactant selected from the group consisting of nonionic surfactants, cationic surfactants and combinations thereof;
g) up to about 4.0% by total weight of the mixture of at least one chain transfer agent;
h) a catalytic amount of polymerization initiator; and
i) the balance of the mixture being water;
to produce a polymer composition having a solids content in the range of about 25.0% to about 50.0% wherein said polymer composition contains quaternary ammonium groups in the molar equivalent range of 0.002 to 0.07 per 100 grams of polymer and amide groups in the molar equivalent range of 0.002 to 0.12 per 100 grams of polymer, and which has a Tg of not greater than about 100°C.

2. A cationic water-insoluble polymer latex composition suitable for use as an ink jet receptive coating, said composition comprising the free radical emulsion polymerization reaction product of a mixture comprising:
a) about 45.0% to about 50.0% by total weight of the mixture of at least one hydroxyl group-containing monomer selected from the group consisting of hydroxyalkyl acrylates having at least 1 hydroxyl group containing from 1 to 4 carbon atoms, hydroxyalkyl methacrylates having at least I hydroxyl group containing from I to 4 carbon atoms, and combinations thereof;
b) about 30.0% to about 37.0% by total weight of the mixture of at least one hydrophobic monomer selected from the group consisting of acrylic esters of alcohols containing from 1 to 22 carbon atoms, methacrylic esters of alcohols containing from I to 22 carbon atoms, styrene, substituted styrenes, acrylonitrile, methacrylonitrile, vinyl halides, vinylidene halides, vinyl alkyl ethers, vinyl esters, and combinations thereof;
c) about 3.0% to about 10.0% by total weight of the mixture of at least one member selected from the group consisting of acrylic acid, methacrylic acid, maleic acid, fumaric acid, and combinations thereof;
d) about 7.0% to about 10.0% by total weight of the mixture of at least one member selected from the group consisting of ethylenically unsaturated monomers containing at least one quaternary ammonium group;
e) up to about 8.0% by total weight of the mixture of at least one amide-functional monomer selected from the group consisting of N-vinyl amides, N-vinyl cyclic amides, acrylamides, N-alkyl acrylamides having at least 1 alkyl group containing from 1 to 4 carbon atoms, methacrylamides, and combinations thereof;
f) about 1.0% to about 3.0% by total weight of the mixture of at least one surfactant selected from the group consisting of nonionic surfactants, cationic surfactants and combinations thereof;
g) up to about 2.0% by total weight of the mixture of at least one chain transfer agent;
h) a catalytic amount of polymerization initiator; and
i) the balance of the mixture being water;
to produce a polymer composition having a solids content in the range of about 25.0% to about 50.0% wherein said polymer composition contains quaternary ammonium groups in the molar equivalent range of 0.03 to 0.05 per 100 grams of polymer and amide groups in the molar equivalent range of 0.03 to 0.12 per 100 grams of polymer, and which has a Tg of not greater than about 100°C.

3. The polymer composition of claim 1 wherein the hydroxyl group-containing monomer is a member selected from the group consisting of hydroxyethyl acrylate, hydroxypropyl acrylate, hydroxybutyl acrylate, hydroxyethyl methacrylate, hydroxypropyl methacrylate, and combinations thereof.

4. The polymer composition of claim 2 wherein the hydroxyl group-containing monomer is a member selected from the group consisting of hydroxyethyl acrylate, hydroxypropyl acrylate, hydroxybutyl acrylate, hydroxyethyl methacrylate, hydroxypropyl methacrylate, and combinations thereof.

5. The polymer composition of claim 1 wherein the ethylenically unsaturated monomer containing at least one quaternary ammonium group is a member selected from the group consisting of vinylbenzyltrimethylammonium salts, acryloyloxyethyltrimethylammonium salts, acryloyloxyethyldiethylmethylammonium salts, methacryloyloxyethyltrimethylammonium salts, methacryloyloxyethylbenzyldimethylammonium salts, acryloyloxyethylbenzyldimethylammonium salts, 2-hydroxy-3-methacryloyloxypropyltrimethylammonium salts, 2-hydroxy-3-acryloyloxypropyltrimethylammonium salts, methacrylamidopropyltrimethylammonium salts, and combinations thereof.

6. The polymer composition of claim 2 wherein the ethylenically unsaturated monomer containing at least one quaternary ammonium group is a member selected from the group consisting of vinylbenzyltrimethylammonium salts, acryloyloxyethyltrimethylammonium salts, acryloyloxyethyldiethylmethylammonium salts, methacryloyloxyethyltrimethylammonium salts, methacryloyloxyethylbenzyldimethylammonium salts, acryloyloxyethylbenzyldimethylammonium salts, 2-Hydroxy-3-methacryloyloxypropyltrimethylammonium salts, 2-Hydroxy-3-acryloyloxypropyltrimethylammonium salts, methacrylamidopropyltrimethylammonium salts, and combinations thereof.

7. The polymer composition of claim 1 wherein the mixture contains from about 1.0% to about 8.0% by total weight of the mixture of at least one amide-functional monomer selected from the group consisting of N-vinyl amides, N-vinyl cyclic amides, acrylamides, N-alkyl acrylamides having at least one alkyl group containing from 1 to 4 carbon atoms, methacrylamides. and combinations thereof.

8. The polymer composition of claim 2 wherein the mixture contains from about 1.0% to about 8.0% by total weight of the mixture of at least one amide-functional monomer selected from the group consisting ofN-vinyl amides, N-vinyl cyclic amides, acrylamides, N-alkyl acrylamides having at least one alkyl group containing from 1 to 4 carbon atoms, methacrylamides, and combinations thereof.

9. The polymer composition of claim 1 wherein the mixture contains at least one nonionic surfactant and at least one cationic surfactant.

10. The polymer composition of claim 2 wherein the mixture contains at least one nonionic surfactant and at least one cationic surfactant.

11. The polymer composition of claim 1 wherein the nonionic surfactant is a member selected from the group consisting of ethoxylated alkylphenols, ethoxylated fatty alcohols, ethylene oxide/propylene oxide block copolymers, and combinations thereof.

12. The polymer composition of claim 2 wherein the nonionic surfactant is a member selected from the group consisting of ethoxylated alkylphenols, ethoxylated fatty alcohols, ethylene oxide/propylene oxide block copolymers, and combinations thereof.

13. The polymer composition of claim 1 wherein the cationic surfactant is a member selected from the group consisting of alkyltrimethylammonium salts wherein the alkyl group contains from 8 to 22 carbon atoms and the counterion of the salt is a member selected from the group consisting of chloride, bromide, methylsulfate, and ethylsulfate; alkylbenzyldimethylammonium salts wherein the alkyl group contains from 8 to 22 carbon atoms and the counterion of the salt is a member selected from the group consisting of chloride, bromide, methylsulfate, and ethyl sulfate; alkylpyridinium salts wherein the alkyl group contains from 8 to 22 carbon atoms and the counterion of the salt is a member selected from the group consisting of chloride, bromide, methylsulfate, and ethylsulfate; and combinations thereof.

14. The polymer composition of claim 2 wherein the cationic surfactant is a member selected from the group consisting of alkyltrimethylammonium salts wherein the alkyl group contains from 8 to 22 carbon atoms and the counterion of the salt is a member selected from the group consisting of chloride, bromide, methylsulfate, and ethylsulfate; alkylbenzyldimethylammonium salts wherein the alkyl group contains from 8 to 22 carbon atoms and the counterion of the salt is a member selected from the group consisting of chloride, bromide, methylsulfate, and ethylsulfate; alkylpyridinium salts wherein the alkyl group contains from 8 to 22 carbon atoms and the counterion of the salt is a member selected from the group consisting of chloride, bromide, methylsulfate, and ethylsulfate; and combinations thereof.

15. The polymer composition of claim 1 wherein the chain transfer agent is a member selected from the group consisting of dodecyl mercaptan, 2-mercaptoethanol, alkyl mercaptopropionates, mercaptoacetic acid, mercaptopropionic acid, octyl mercaptan, and combinations thereof.

16. The polymer composition of claim 2 wherein the chain transfer agent is a member selected from the group consisting of dodecyl mercaptan, 2-mercaptoethanol, alkyl mercaptopropionates, mercaptoacetic acid, mercaptopropionic acid, octyl mercaptan, and combinations thereof.

17. The polymer composition of claim I wherein the polymerization initiator comprises from about 0.1% to about 3.0% by total weight of the mixture and is a member selected from the group consisting of thermal initiators, redox initiators, and combinations thereof.

18. The polymer composition of claim 17 wherein the thermal initiator is a member selected from the group consisting of hydrogen peroxide, t-butyl hydroperoxide, di-t-butyl peroxide, benzoyl peroxide, benzoyl hydroperoxide, 2,4-dichlorobenzoyl peroxide, t-butyl peracetate, azobisisobutyronitrile, isopropyl peroxycarbonate, and combinations thereof.

19. The polymer composition of claim 17 wherein the redox initiator is a member selected from the group consisting of cumene hydroperoxide-sodium metabisulfite, cumene hydroperoxide-iron (II) sulfate, and combinations thereof.

20. The polymer composition of claim 2 wherein the polymerization initiator comprises from about 0.1% to about 3.0% by total weight of the mixture and is a member selected from the group consisting of thermal initiators, redox initiators, and combinations thereof.

21. The polymer composition of claim 20 wherein the thermal initiator is a member selected from the group consisting of hydrogen peroxide, t-butyl hydroperoxide, di-t-butyl peroxide, benzoyl peroxide, benzoyl hydroperoxide, 2,4-dichlorobenzoyl peroxide, t-butyl peracetate, azobisisobutyronitrile, isopropyl peroxycarbonate, and combinations thereof.

22. The polymer composition of claim 20 wherein the redox initiator is a member selected from the group consisting of cumene hydroperoxide-sodium metabisulfite, cumene hydroperoxide-iron (II) sulfate, and combinations thereof.

23. An ink jet receptive coating comprising the polymer composition of claim 1.

24. The ink jet receptive coating of claim 23 wherein the coating has a surface energy in the range of about 38 to about 70 dynes/cm.

25. The ink jet receptive coating of claim 23 wherein the coating has a surface energy in the range of about 44 to about 65 dynes/cm.

26. The ink jet receptive coating of claim 23 wherein the coating further comprises a pigment.

27. The ink jet receptive coating of claim 26 wherein the pigment is a member selected from the group consisting of silica, alumina, plastic pigments, calcium carbonate, kaolin clay, and combinations thereof.

28. An ink jet receptive coating comprising the polymer composition of claim 2.

29. The ink jet receptive coating of claim 28 wherein the coating has a surface energy in the range of about 38 to about 70 dynes/cm.

30. The ink jet receptive coating of claim 28 wherein the coating has a surface energy in the range of about 44 to about 65 dynes/cm.

31. The ink jet receptive coating of claim 28 wherein the coating further comprises a pigment.

32. The ink jet receptive coating of claim 28 wherein the pigment is a member selected from the group consisting of silica, alumina, plastic pigments, calcium carbonate, kaolin clay, and combinations thereof.

33. An ink jet printable product comprising a substrate coated on at least one side with the coating of claim 23.

34. The ink jet printable product of claim 33 where the substrate is a member selected from the group consisting of paper, paperboard, wood, plastic film, metal foil, textiles, and combinations thereof.

35. An ink jet printable product comprising a substrate coated on at least one side with the coating of claim 28.

36. The ink jet printable product of claim 35 where the substrate is a member selected from the group consisting of paper, paperboard, wood, plastic film, metal foil, textiles, and combinations thereof.

37. The polymer composition of claim I having a solids content in the range of about 30.0% to about 40.0%.

38. The polymer composition of claim 2 having a solids content in the range of about 30.0% to about 40.0%.

39. The polymer composition of claim 1 wherein the Tg is in the range of about 64°C to less than 100°C.

40. The polymer composition of claim I wherein the Tg in the range of about 68°C to about 78°C.

41. The polymer composition of claim 2 wherein the Tg is in the range of about 64°C to less than 100°C.

42. The polymer composition of claim 2 having a Tg in the range of about 68°C to about 78°C.

43. The polymer composition of claim I wherein the mixture contains from about 3.0% to about 10.0% by total weight of the mixture of at least one member selected from the group consisting of acrylic acid, methacrylic acid, maleic acid, fumaric acid, and combinations thereof.

44. The polymer composition of claim 1 wherein the mixture contains from about 4.0% to about 8.0% by total weight of the mixture of at least one member selected from the group consisting of acrylic acid, methacrylic acid, maleic acid, fumaric acid, and combinations thereof.

45. The polymer composition of claim 2 wherein the mixture contains from about 4.0% to about 8.0% by total weight of the mixture of at least one member selected from the group consisting of acrylic acid, methacrylic acid, maleic acid, fumaric acid, and combinations thereof.

46. A core-shell composition comprising the cationic water-insoluble polymer latex composition of claim I disposed generally about a polymeric core component.

47. The core-shell composition of claim 46 wherein said core-shell particle further comprises a plurality of shell components, each disposed about said core component.

48. A latex comprising an aqueous suspension of core-shell composition of claim 46.

49. An ink jet receptive coating comprising the latex of claim 48.

50. The ink jet receptive coating of claim 49 wherein the coating further comprises a pigment.

51. The ink jet receptive coating of claim 50 wherein the pigment is a member selected from the group consisting of silica, alumina, plastic pigments, calcium carbonate, kaolin clay, and combinations thereof.

52. An ink jet printable product comprising a substrate coated on at least one side with the coating of claim 49.

53. The ink jet printable product of claim 52 wherein the substrate is a member selected from the group consisting of paper, paperboard, wood, plastic film, metal foil, textiles, and combinations thereof.

54. A core-shell composition comprising the cationic water-insoluble polymer latex composition of claim 2 disposed generally about a polymeric core component.

55. The core-shell composition of claim 54 wherein said core-shell composition further comprises a plurality of shell components, each disposed about said core component.

56. A latex comprising an aqueous suspension of core-shell composition of claim 54.

57. An ink jet receptive coating comprising the latex of claim 56.

58. The ink jet receptive coating of claim 58 wherein the coating further comprises a pigment.

59. The ink jet receptive coating of claim 57 wherein the pigment is a member selected from the group consisting of silica, alumina, plastic pigments, calcium carbonate, kaolin clay, and combinations thereof.

60. An ink jet printable product comprising a substrate coated on at least one side with the coating of claim 57.

61. The ink jet printable product of claim 60 wherein the substrate is a member selected from the group consisting of paper, paperboard, wood, plastic film, metal foil, textiles, and combinations thereof.
